# EUROPEAN PATENT SPECIFICATION

(11) **EP 2 017 638 B1**
(45) Date of publication and mention of the grant of the patent: **16.07.2014**
(21) Application number: 07024655.8
(22) Date of filing: 19.12.2007
(51) Int. Cl.: G01S 5/02, G01S 5/10

(54) **System and method for estimating a location of a local device and a local device**
System und Verfahren zum Schätzen des Standorts einer lokalen Vorrichtung sowie lokale Vorrichtung
Système et procédé d'estimation de l'emplacement d'un dispositif local et dispositif local

(30) Priority: 17.07.2007 EP 07013996
(43) Date of publication of application: 21.01.2009
(73) Proprietor: Siemens Aktiengesellschaft, 80333 München (DE)
(72) Inventor: Marchenko, Maksysm, 85567 Grafing (DE); Ramirez, Alejandro, 80799 München (DE); Schwingenschlögl, Christian, Dr., 85640 Putzbrunn (DE)

(56) References cited:
- WO-A-2007/067821
- US-A- 4 533 871
- US-A1- 2002 196 186
- US-A1- 2004 085 242
- KANAAN M ET AL: "Algorithm for TOA-based indoor geolocation" ELECTRONICS LETTERS, IEE STEVENAGE, GB, vol. 40, no. 22, 28 October 2004 (2004-10-28), pages 1421-1422, XP006022781 ISSN: 0013-5194
- HAIFENG YUAN ET AL: "Location Sensing in Enhanced IEEE802.11e WLANs" 18 April 2006 (2006-04-18), ADVANCED INFORMATION NETWORKING AND APPLICATIONS, 2006. AINA 2006. 20T H INTERNATIONAL CONFERENCE ON VIENNA, AUSTRIA 18-20 APRIL 2006, PISCATAWAY, NJ, USA,IEEE, PAGE(S) 423 - 428 , XP010915400 ISBN: 978-0-7695-2466-5 * column 5 *
- VILLADANGOS J M ET AL: "Improvement of ultrasonic beacon-based local position system using multi-access techniques" INTELLIGENT SIGNAL PROCESSING, 2005 IEEE INTERNATIONAL WORKSHOP ON SEPT. 1, 2005, PISCATAWAY, NJ, USA,IEEE, 1 September 2005 (2005-09-01), pages 352-357, XP010852365 ISBN: 978-0-7803-9030-0
- MIKE HAZAS, ANDY WARD: "A Novel Broadband Ultrasonic Location System" PROCEEDINGS OF UBICOMP 2002, LECTURE NOTES IN COMPUTER SCIENCE, vol. 2498, 1 October 2002 (2002-10-01), pages 264-280, XP002503238 Göteborg, Sweden

## Description

The present invention relates to a method for estimating a location of a local device and a related system for estimating a location of a local device and the local device.

Outdoor location systems are ubiquitous, e.g. in navigation systems of cars, phones and even watches. One of these location systems is the global navigation satellite system. This system is based on a time of arrival approach. The satellites have precisely synchronized clocks. Each satellite regularly broadcasts a signal stamped with a global time. The signals are arriving at the local device at different local times due to the differently long distances from the satellites to the local device. The local device determines based on the time differences the relative distances to the satellites and by means of trilateration its actual location.

These systems strongly depend on a clear line of sight. Obstacles may alter the travelling speed of the signals, provide echoes, etc. Therefore, the global navigation system is not reliable indoors.

An aproach to provide an indoor geolocation system is given in "Algorithm for TOA-based indoor geolocation" published by M. Kanaan and K. Pahlavan in Electronics Letters, vol. 40, no. 22, October 28, 2004. The geolocation system is based on a time of arrival approach. The expected time of arrival from certain points is known. The system determines an estimated location based on a search for a minimal difference of a measured time of arrival and the expected time of arrival from the certain points.

The present invention provides an alternative approach for an indoor geolocation system and a method for estimating a location of a local device which may avoid the use of synchronized clocks.

According to one aspect of the invention a method for estimating a location of a local device comprises the following steps:
broadcasting a signal between at least one beacon and the local device;
determining a time of flight value of each of the signals at a location of the local device for obtaining an actual set of time of flight values;
estimating the location of the local device by applying an algorithm to the actual set of time of flight values and at least one reference set of time of flight values each reference set corresponding to a known location of the local device.

According to a second aspect of the invention a system for estimating a location of a local device comprises:
at least one beacon each emitting a signal upon a trigger signal;
a local device having a trigger generator for emitting the trigger signal, a threshold sensor for detecting a first rise of the signal emitted by one of the beacons above a threshold, and a timer connected to the trigger generator and the threshold sensor for determining a time of flight value between the one of the beacons and the local device at a location;
a storage unit storing at least one reference set of time of flight values each reference set corresponding to a known location of the local device; and
an estimation means for estimating the location of the local device by applying an algorithm to the actual set of time of flight values determined by the timer and the at least one reference set of time of flight values.

According to a third aspect of the invention a local device for performing a method according to the first aspect comprises:
a trigger generator for emitting a trigger signal, a threshold sensor for detecting a first rise above a threshold of a signal emitted by a beacon upon receipt of the trigger signal, and a timer connected to the trigger generator and
the threshold sensor for determining a time of flight value between the beacon and the local device at a location;
a memory device storing at least one reference set of time of flight values each reference set corresponding to a known location of the local device; and
an estimation means for estimating the location of the local device by applying an algorithm to the actual set of time of flight values determined by the timer and the at least one reference set of time of flight values.

The present invention will be illustrated taking reference to embodiments and figures. The figures:
- Figure 1: illustrates a set up for a first embodiment;
- Figure 2: illustrates a block diagram of a local device according to the first embodiment;
- Figure 3: illustrates a block diagram of a beacon according to the first embodiment;
- Figure 4: illustrates a flow diagram according to the first embodiment; and
- Figure 5: illustrates a block diagram of an estimation means according to the first embodiment.

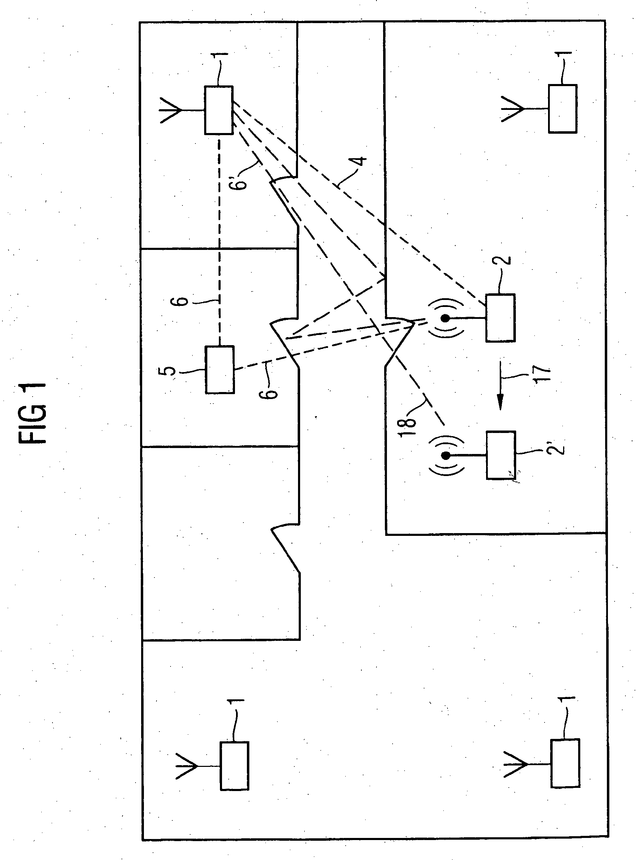

A set up of the first embodiment is demonstrated for an exemplary surrounding. A floor plan of an apartment having several rooms and respective doors is illustrated in figure 1. A plurality of beacons 1 is arranged in some or all of the rooms. Two or more beacons 1 may be arranged in one room, in particular in larger rooms. The beacons 1 are stationary at well defined positions.

A person moving in the apartment carries a local device 2. The local device 2 and the beacons 1 do interact such that a location of the local device 2 may be determined or estimated and provided to the person.

The estimation of the location of the local device 2 is based on time of flight measurements.

Firstly, the time of flight value depends on the shortest distance of the local device 2 to the selected beacon 1. The relation of the time of flight value and the shortest distance is determined by the travelling speed of the signal.

There may be, however, a plurality of travelling paths of a signal between the local device 2 and the selected beacon 1. Reflections of the signal at obstacles 5, like doors, walls, metallic objects, etc. are causing alternative travelling paths 6 additional to a travelling path 4 along the shortest distance. A fraction of the signal travelling along an alternative travelling path 6 is always arriving later at the beacons 1 and the local device 2 compared to a fraction of the signal travelling along the shortest distance. Therefore, at a first glance a time of flight measurement should reflect the shortest distance 4 between the beacons 1 and the local device 2.

On closer inspection there may be situations in which a time of flight measurement reflects a distance corresponding to an alternative travelling path 6. The following demonstration is only given as an example and is not intended to cover fully all technical limitations and physical effects causing the above situation.

A signal is dampened by absorbers, like walls, doors, non-metallic objects etc, placed along a travelling path. The signal along the shortest distance 4 is dampened by two walls in the exemplary situation of figure 1. The signal along the alternative travelling path 6 is dampened by another wall and maybe damped by two doors which can be opened or closed individually.

For illustration purpose a signal travelling through two walls or two doors is assumed to be just damped below a detection limit of receiving units in the local device 2 and the beacon 1, respectively. A signal travelling along the shortest path 4 is not detected. Hence, a time of flight measurement performed by the beacon 1 and the local device 2 does not reflect the shortest path 4.

In a first situation both doors may be open along the alternative travelling path 6. The signal strength remains above the detection limit. A time of flight measurement performed may reflect the longer distance according to the alternative travelling path 6 as no measurement corresponding to the shortest distance 4 could be obtained.

In a second situation one of the doors may be closed. The signal strength of the signal along the alternative path 6 is dropped below the detection limit, too. A signal travelling along a second alternative path 6' may now provide the only signal above the detection limit. Thus, a different time of flight value is obtained just by closing one door and without a change of the location of the local device 2.

A movement of the local device 2 along a direction 17 may provide a discontinuous increase or decrease of time of flight values. Considering again the exemplary situation given in figure 1, the local device 2 may be moved to a further location 2' where no obstacle is in the line of sight 18 between the local device 2 and the beacon 1. As long as two walls obstruct the line of sight, only the signal travelling along an alternative travelling path 6' provides a sufficient signal strength. At a moment, a free line of sight is established, the signal strength of a signal travelling along the shortest distance 18 rises above the detection limit. At this moment, the time of flight values measured drop from a larger time of flight value corresponding to the alternative travelling path 6' down to a lower time of flight value corresponding to the shortest distance 18. This discontinuity of the time of flight values measured reflects the discontinuity caused by the detection limit of sensors used.

A first embodiment of a method for estimating the location of the local device may deal with above situations. A brief description of a local device 2 and a beacon 1 according to a first embodiment is given which may be used for a method to estimate the location of the local device 2.

The local device 2 according to the first embodiment comprises a timer 3, a trigger generator 4, an emitter 5, a receiver 6, a threshold sensor 7, and an estimation means 8. The trigger generator 4 generates a trigger signal 10 which is synchronously forwarded to the timer 3 and the emitter 5. The timer 3 is reset and started by the trigger signal 10. The emitter 5 broadcasts the trigger signal 10. The trigger signal 10 may be encoded such that it addresses a single specified beacon 1. The trigger signal 10 may be encoded by a unique sequence of pulses or by a unique carrier frequency, for instance.

The receiver 6 receives a signal 11 broadcasted by the beacon 1. The signal 11 is forwarded to the threshold sensor 7. The threshold sensor 7 outputs a stop signal 12 at the moment the incoming signal 11 rises above a threshold value. The stop signal 12 is forwarded to the timer 3 such that the timer 3 is stopped. The timer 3 transmits the measured duration, i.e. the value of the time interval between the trigger signal 10 and the stop signal 12, to an estimation means 8.

Each beacon 1 may encode a unique signature into the signal. Therefore, a signal decoder 13 and a verification device 14 may be provided in the local device 2. The incoming signal 11 is provided to the signal decoder 13. The signal decoder 13 decodes the incoming signal 11 and determines the beacon 1 which broadcasted the incoming signal 11. The verification device 14 verifies that the incoming signal 11 corresponds to the same beacon 1 which has previously been addressed by the trigger signal 10. If so the verification device 14 confirms the measured duration with an approval signal 15 sent to the estimation means 8.

The signal decoder 13 may be activated by the stop signal 12.

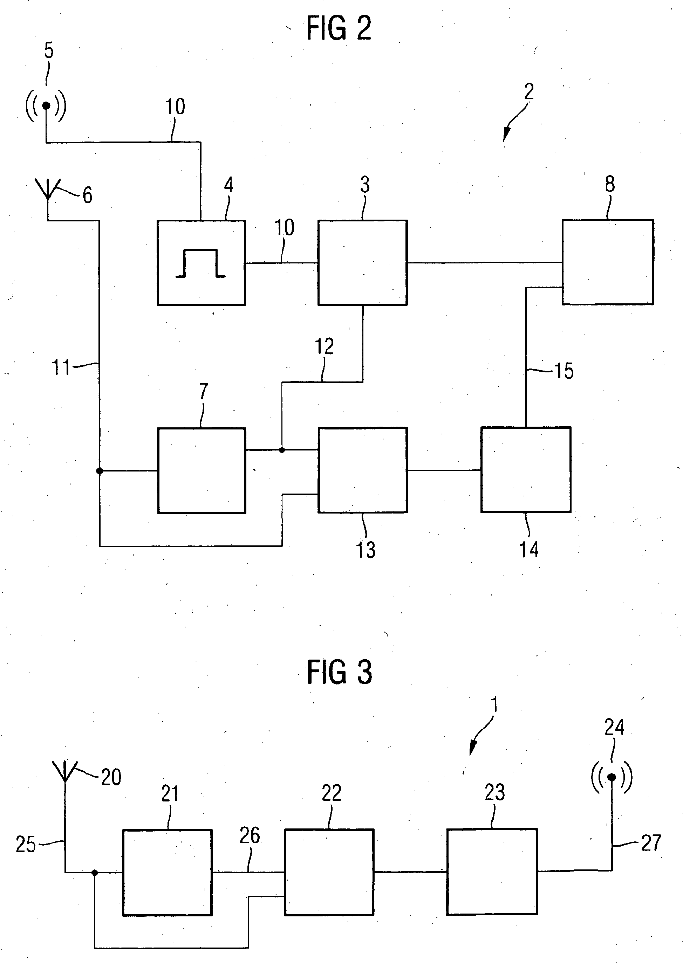

The beacon 1 according to the first embodiment comprises a receiver 20, a threshold detector 21, a trigger decoder 22, a signal generator 23, and an emitter 24 (figure 3). The receiver 20 may receive an incoming trigger signal 25 which has been previously emitted by the local device 2. The optional threshold detector 21 outputs an activation signal 26 when the incoming trigger signal 25 exceeds a threshold value. The trigger decoder 22 may be activated by the activation signal 26. The trigger decoder 22 decodes the incoming trigger signal 25 and determines whether the beacon 1 is addressed by the incoming trigger signal 25. If so the signal generator 23 is activated for generating a signal 27. The signal 27 may be provided with a signature which is unique for each of the beacons 1 used. The signal 27 is broadcasted by the emitter 24.

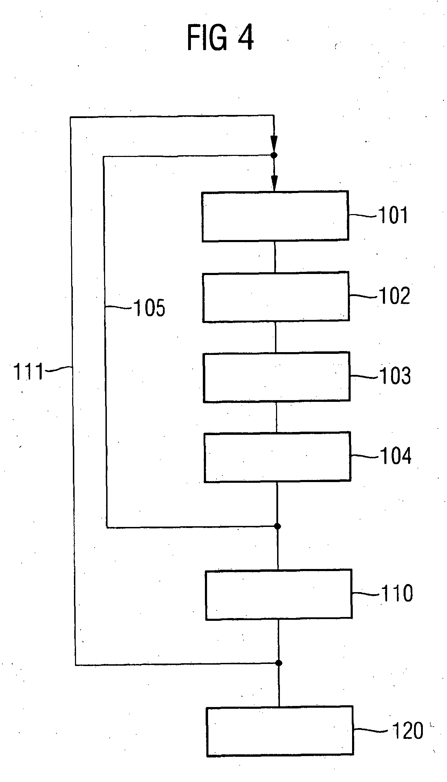

The first embodiment of a method for estimating the location is explained along with a flow diagram in figure 4.

The local device 2 generates a trigger signal 10 by means of its trigger generator 4. The timer 3 is started. The trigger signal 10 is encoded to address a specific one of the beacons 1 and emitted by the emitter 5 (step 101).

The trigger signal 10 travels along a plurality of travelling paths 4, 6 to the beacons 1. Each of the beacons 1 receives a trigger signal 25 being part of the emitted trigger signal 10. The trigger signal 10 may be damped, distorted, provided with several echoes, etc.

The beacon 1 addressed by the trigger signal 25 returns a signal 27 upon receipt of the trigger signal 10 (step 102). There may be a delay of processing the trigger signal 10 and generating the signal 27 by means of the signal generator 23.

The signal 27 travels along a plurality of travelling paths 4, 6 to the local device 2. The local device 2 receives an incoming signal 11 being part of the emitted signal 27. The incoming signal 11 may be damped, distorted, provided with several echoes, etc.

The threshold sensor 7 stops the timer 3 when the signal strength of the incoming signal 11 rises above a predetermined threshold value (step 103). The duration measured by the timer 3 is forwarded to the estimation means 8 (step 104). The estimation means 8 stores the duration and interprets the duration as a time of flight value of the signal 27 between the local device 2 and the beacon 1 addressed by the trigger signal 10.

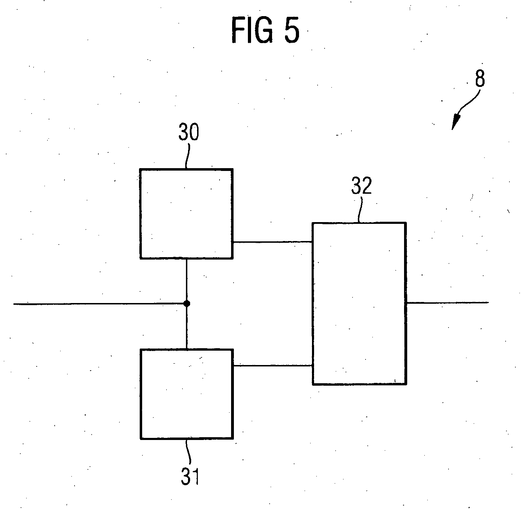

Several time of flight values are gathered for the same beacon 1 by repeating steps 101 to 104 several times (loop 105). An average value for the several time of flight values is obtained using a Gaussian filter (step 110). A histogram of the time of flight values may be determined and a Gaussian distribution is fitted to the histogram. The mean value of the Gaussian distribution may be taken as average of the time of flight values. The average value is stored in a first memory 30 of the estimation means 8 (figure 5).

Other beacons 1 are addressed in sequence by means of differently encoded trigger signals 10 (loop 111). An average time of flight value is obtained for each of the other beacons 1 and stored in the first memory 30 as outlined above along with steps 101 to 110. Some beacons 1 may not respond because the trigger signal 10 or the signal 27 is dampened below detection limits of the receivers 6, 25. Preferably, the sequence is repeated until at least average time of flight values corresponding to three different beacons 1 could be obtained.

A map of the area in which the local device 2 may move is stored in a second memory 31 of the estimation means 8. The map contains a reference set, so-called fingerprints, for some reference locations in the area. Each fingerprint comprises a set of time of flight values the local device 10 would determine at the reference location. The fingerprints may be obtained during a training by moving the local device 10 to the reference locations and determining average time of flight values as outlined above taking reference to steps 101 to 110. The average time of flight values are stored in the second memory 31.

Movable objects in the area may be moved into different positions. The movable objects may affect the time of flight values. Thus, an embodiment provides additional fingerprints for at least some of the locations for which the movable objects are arranged in different positions. The additional fingerprints are stored in the second memory 31. Thus, the map may contain several fingerprints for a single location. The map may contain additional to the location information additional information referring to the position of movable objects in the area. The movable objects may be doors, movable walls, furniture, vehicles, robots, parts of machines etc.

The estimation means 8 estimates the location of the local device 2 using a predictor means 32. The predictor means 32 loads the set of reference values, i.e. the map of fingerprints, and applies a prediction algorithm to the reference set and the actual average flight of time values stored in the first memory 31.

The prediction algorithms may use neural networks, adaptive filters, or a maximum likelihood estimation. An underlying concept of some of the prediction algorithms is to determine the difference of the actual value and each reference value and to sum up the reference locations weighted by the difference. The estimated location is taken for the weighted sum.

In a second embodiment the trigger signal 10 may be not encoded, but addresses all beacons 1 simultaneously. The threshold sensor 7 emits a release signal 12 when the incoming signal 11 caused by a beacon 1 rises above the threshold value. The timer 3 forwards the duration between the trigger signal and the release signal 12 to the estimation means 8 but the timer 3 is not reset or stopped. Thus, the timer 3 may forward the duration value between the trigger signal and a further release signal 12 caused by a further beacon 1. The signal decoder 13 decodes a signature of the emitting beacon 1 in the incoming signal 11. The verification device 14 may confirm based on the signature that the incoming signal 11 is of beacon selected of a specified group of beacons 1. The verification device 14 forwards a signal 15 to the estimation means 8. The signal 15 may be encoded with a canceling information such that the estimation means 8 clears a previously obtained duration value from the first memory 31. Or the signal 15 may be encoded to forward the signature of the beacon 1 such that the estimation means 8 can store the signature of the beacon 1 along with the previously obtained duration value.

In a third embodiment the timer 3 is not triggered by the threshold sensor 7 but by the validation means 14. The duration measured by the timer 3 thus includes the processing time of the decoder 13. The map of fingerprints should be obtained by the same local device 2 or an equally configured device which will be used in the area. Therefore, the map may account for the processing time of the decoder 13.

In a fourth embodiment standard WLAN transmitter devices may be used for the local device 2 and the beacons 1. The WLAN transmitter device can be reconfigured to provide the timer 3, the trigger generator 4, the emitter 5, the receiver 6, and the threshold sensor 7. Equally a WLAN transmitter device can be reconfigured to provide the receiver 20, the threshold detector 21, the trigger decoder 22, the signal generator 23, and the emitter 24. Other standard devices like RFID-transmitters, UMTS-transmitters, GSM-transmitters, WiMaX-transmitters, UWB-transmitters, bluetooth-transmitters may be reconfigured to be used in a local device 2 and a beacon 1.

The estimation means 8 may be arranged in one of the beacons 1 or a separate device instead being placed on the local device 2. The duration measured by the timer 3, i.e. the time of flight values can be broadcasted to the estimation means via the emitter 5 or a separate emitter. The estimation means 8 estimates the location of the local device 2 and forward the estimated location via a broadcast signal to the local device 2.

The local device 2 may be provided with a display for indicating the estimated location.

In a fifth embodiment the beacons 1 comprise a timer 3, a trigger generator 4, an emitter 5, a receiver 6, and a threshold sensor 7. The local device 2 comprises a receiver 20, a threshold detector 21, a trigger decoder 22, a signal generator 23, and an emitter 24. Hence, the beacons 1 emit the trigger signal 10 and the local device 2 returns a signal 27 upon receipt of the trigger signal 10. The time of flight values measured by the beacons 1 are forwarded to an estimation means 8. The estimation means 8 performs a location estimation as outlined along with the above embodiments.

## Claims

1. A method for estimating a location of a local device, comprising the steps of:
broadcasting a signal between at least one beacon (1) and a local device at a location;
determining a time of flight value for the signal broadcasted by the at least one beacon (1) for obtaining an actual set of time of flight values;
**characterized by**
estimating the location of a local device (2) by applying an algorithm to the actual set of time of flight value and to at least one reference set of time of flight values,
each reference set of time of flight values corresponding to a known location of the local device (2),
wherein the at least one reference set of time of flight values is obtained by placing the local device (2) at one known location, determining the at least one reference set of time of flight values, and storing the at least one reference set of time of flight values as reference set of time of flight values for the known location,
wherein said algorithm is capable of determining a difference between the actual value of time of flight and each reference value of said at least one reference set of time of flight values and to sum up reference locations weighted by the difference, and
wherein estimated location is the weighted sum.

2. The method according to claim 1, wherein the time of flight value is determined as a time interval starting when a trigger signal which is emitted by the local device (2) or by one of the beacons (1) starts a timer and ending when the local device (2) or the beacon (1) detects a first rise above a threshold value of the intensity of a signal returned by the beacon (1) or the local device (2) respectively upon receipt of the trigger signal.

3. A system for estimating a location of a local device (2), comprising:
at least one beacon (1) each emitting a signal upon a trigger signal (10);
a local device (2) having a trigger generator (4) for emitting the trigger signal (10),
a threshold sensor (7) for detecting a first rise of the signal, emitted by one of the at least one beacon (1), above a threshold, and a timer (3) connected to the trigger generator (4) and the threshold sensor (7) for determining a time of flight value between one of the beacons (1) of said at least one beacon (1) and the local device (2) at a location;
a memory device (31) storing at least one reference set of time of flight values, each reference set corresponding to a known location of the local device (2);
wherein the at least one reference set is obtained by placing the local device (2) at one known location, determining the at least one reference set of time of flight values, and
storing the time of flight values as reference set of time of flight values for the known location in the memory device (31) ; and
an estimation means (8) for estimating the location of the local device (2) by applying an algorithm to the actual set of time of flight values for the local device (2) at the location and the at least one reference set of time of flight values,
wherein said algorithm is capable of determining a difference between the actual value of time of flight and each reference value of said at least one reference set of time of flight values and to sum up reference locations weighted by the difference, and
wherein estimated location is the weighted sum.

4. The system according to claim 3, the local device (2) comprising a radio transmitter for transmitting the actual set of time of flight values to the estimation means (8) and a receiver for receiving the estimated location.

5. The system according to claim 3 or 4, wherein the beacon (1) is at least one of WLAN-transmitter, RFID-transmitter, GSM-transmitter, UMTS-transmitter, and WiMaX-transmitter.

6. The system of claim 5, wherein said trigger generator (4) is comprised by said at least one beacon (1).

## Patentansprüche

1. Verfahren zum Schätzen eines Standorts einer lokalen Vorrichtung mit folgenden Schritten:
Ausstrahlen eines Signals zwischen mindestens einer Bake (1) und einer lokalen Vorrichtung an einem Standort,
Ermitteln eines Laufzeitwertes für das von der mindestens einen Bake (1) ausgestrahlte Signal zum Gewinnen eines Laufzeit-Istwertsatzes,
**gekennzeichnet durch**
das Schätzen des Standortes einer lokalen Vorrichtung (2) durch Anwenden eines Algorithmus auf den Laufzeit-Istwertsatz und auf mindestens einen Laufzeit-Bezugswertsatz,
wobei jeder Laufzeit-Bezugswertsatz einem bekannten Standort der lokalen Vorrichtung (2) entspricht,
wobei der mindestens eine Laufzeit-Bezugswertsatz **durch** Platzieren der lokalen Vorrichtung (2) an einem bekannten Standort, Ermitteln des mindestens einen Laufzeit-Bezugswertsatzes und Speichern des mindestens einen Laufzeit-Bezugswertsatzes als Laufzeit-Bezugwertsatz für den bekannten Standort gewonnen wird,
wobei der Algorithmus in der Lage ist, eine Differenz zwischen dem Laufzeit-Istwert und jedem Bezugswert des mindestens einen Laufzeit-Bezugswertsatzes zu ermitteln und nach der Differenz gewichtete Bezugsstandorte zu summieren, und
wobei der geschätzte Standort die gewichtete Summe ist.

2. Verfahren nach Anspruch 1, bei dem die Laufzeitwerte als Zeitintervall ermittelt werden, das beginnt, wenn ein von der lokalen Vorrichtung (2) oder einer der Baken (1) ausgesendetes Auslösesignal einen Zeitgeber startet, und endet, wenn die lokale Vorrichtung (2) oder die Bake (1) einen ersten Anstieg der Stärke eines von der Bake (1) beziehungsweise der lokalen Vorrichtung (2) nach Empfang des Auslösesignals zurückgesendeten Signals über einen Schwellwert erkennt.

3. System zum Schätzen eines Standorts einer lokalen Vorrichtung (2) mit Folgendem:
mindestens einer Bake (1), die jeweils auf ein Auslösesignal (10) hin ein Signal aussendet,
einer lokalen Vorrichtung (2) mit einem Auslösergenerator (4) zum Aussenden des Auslösesignals (10),
einem Schwellwertsensor (7) zum Erkennen eines ersten Anstiegs des Signals, das von einer der mindestens einen Bake (1) ausgesendet wird, über einen Schwellwert, und
einem Zeitgeber (3), der zum Ermitteln einer Laufzeit zwischen einer der Baken (1) der mindestens einen Bake (1) und der lokalen Vorrichtung (2) an einem Standort mit dem Auslösergenerator (4) und dem Schwellwertsensor (7) verbunden ist,
einer Speichervorrichtung (31), die mindestens einen Laufzeit-Bezugswertsatz speichert, wobei jeder Bezugswertsatz einem bekannten Standort der lokalen Vorrichtung (2) entspricht,
wobei der mindestens eine Bezugswertsatz durch Platzieren der lokalen Vorrichtung (2) an einem bekannten Standort, Ermitteln des mindestens einen Laufzeit-Bezugswertsatzes und Speichern der Laufzeitwerte in der Speichervorrichtung (31) als Laufzeit-Bezugwertsatz für den bekannten Standort gewonnen wird und
einem Schätzmittel (8) zum Schätzen des Standortes der lokalen Vorrichtung (2) durch Anwenden eines Algorithmus auf den Laufzeit-Istwertsatz für die lokale Vorrichtung (2) am Standort und auf den mindestens einen Laufzeit-Bezugswertsatz,
wobei der Algorithmus in der Lage ist, eine Differenz zwischen dem Laufzeit-Istwert und jedem Bezugswert des mindestens einen Laufzeit-Bezugswertsatzes zu ermitteln und nach der Differenz gewichtete Bezugsstandorte zu summieren, und
wobei der geschätzte Standort die gewichtete Summe ist.

4. System nach Anspruch 3, bei dem die lokale Vorrichtung (2) einen Funksender zum Senden des Laufzeit-Istwertsatzes zum Schätzmittel (8) und einen Empfänger zum Empfangen des geschätzten Standortes umfasst.

5. System nach Anspruch 3 oder 4, bei dem es sich bei der Bake (1) zumindest um einen WLAN-Sender, einen RFID-Sender, einen GSM-Sender, einen UMTS-Sender oder einen WiMaX-Sender handelt.

6. System nach Anspruch 5, bei dem der Auslösergenerator (4) in der mindestens einen Bake (1) enthalten ist.

## Revendications

1. Un procédé d'estimation d'un emplacement d'un dispositif local, comprenant les étapes suivantes :
la radiodiffusion d'un signal entre au moins une balise (1) et un dispositif local au niveau d'un emplacement,
la détermination d'une valeur de temps de vol pour le signal radiodiffusé par la au moins une balise (1) de façon à obtenir un ensemble réel de valeurs de temps de vol,
**caractérisé par**
l'estimation de l'emplacement d'un dispositif local (2) par l'application d'un algorithme à l'ensemble réel de valeurs de temps de vol et à au moins un ensemble de référence de valeurs de temps de vol,
chaque ensemble de référence de valeurs de temps de vol correspondant à un emplacement connu du dispositif local (2),
dans lequel le au moins un ensemble de référence de valeurs de temps de vol est obtenu par le placement du dispositif local (2) à un emplacement connu, la détermination du au moins un ensemble de référence de valeurs de temps de vol et la conservation en mémoire du au moins un ensemble de référence de valeurs de temps de vol en tant qu'ensemble de référence de valeurs de temps de vol pour l'emplacement connu,
dans lequel ledit algorithme est capable de déterminer une différence entre la valeur réelle de temps de vol et chaque valeur de référence dudit au moins un ensemble de référence de valeurs de temps de vol et d'additionner des emplacements de référence pondérés par la différence, et
dans lequel l'emplacement estimé est la somme pondérée.

2. Le procédé selon la revendication 1, dans lequel la valeur de temps de vol est déterminée comme étant un intervalle temporel débutant au moment où un signal déclencheur qui est émis par le dispositif local (2) ou par l'une des balises (1) met en route une horloge et se terminant au moment où le dispositif local (2) ou la balise (1) détecte une première élévation au-dessus d'une valeur seuil de l'intensité d'un signal renvoyé par la balise (1) ou le dispositif local (2) respectivement après réception du signal déclencheur.

3. Un système d'estimation d'un emplacement d'un dispositif local (2), comprenant :
au moins une balise (1), chacune d'elles émettant un signal en fonction d'un signal déclencheur (10),
un dispositif local (2) possédant un générateur de déclencheurs (4) destiné à l'émission du signal déclencheur (10),
un capteur de seuil (7) destiné à la détection d'une première élévation du signal, émis par l'une des au moins une balises (1), au-dessus d'un seuil, et une horloge (3) raccordée au générateur de déclencheurs (4) et au capteur de seuil (7) pour la détermination d'une valeur de temps de vol entre une des balises (1) de ladite au moins une balise (1) et le dispositif local (2) au niveau d'un emplacement,
un dispositif à mémoire (31) conservant en mémoire au moins un ensemble de référence de valeurs de temps de vol, chaque ensemble de référence correspondant à un emplacement connu du dispositif local (2),
dans lequel le au moins un ensemble de référence est obtenu par le placement du dispositif local (2) à un emplacement connu, la détermination du au moins un ensemble de référence de valeurs de temps de vol, et la conservation en mémoire des valeurs de temps de vol en tant qu'ensemble de référence de valeurs de temps de vol pour l'emplacement connu dans le dispositif à mémoire (31), et
un moyen d'estimation (8) pour l'estimation de l'emplacement du dispositif local (2) par l'application d'un algorithme à l'ensemble réel de valeurs de temps de vol pour le dispositif local (2) au niveau de l'emplacement et au au moins un ensemble de référence de valeurs de temps de vol,
dans lequel ledit algorithme est capable de déterminer une différence entre la valeur réelle de temps de vol et chaque valeur de référence dudit au moins un ensemble de référence de valeurs de temps de vol et d'additionner des emplacements de référence pondérés par la différence, et
dans lequel l'emplacement estimé est la somme pondérée.

4. Le système selon la revendication 3, le dispositif local (2) comprenant un émetteur radio pour la transmission de l'ensemble réel de valeurs de temps de vol au moyen d'estimation (8) et un récepteur destiné à la réception de l'emplacement estimé.

5. Le système selon la revendication 3 ou 4, dans lequel la balise (1) est au moins un émetteur parmi un émetteur WLAN, un émetteur RFID, un émetteur GSM, un émetteur UMTS et un émetteur WiMaX.

6. Le système selon la revendication 5, dans lequel ledit générateur de déclencheurs (4) est compris par ladite au moins une balise (1).
